# EUROPEAN PATENT SPECIFICATION

(11) **EP 3 712 075 B1**
(45) Date of publication and mention of the grant of the patent: **22.03.2023**
(21) Application number: 20170621.5
(22) Date of filing: 27.09.2011
(51) Int. Cl.: B64F 1/02

(54) **LINE CAPTURE DEVICES FOR UNMANNED AIRCRAFT, AND ASSOCIATED SYSTEMS AND METHODS**
LEITUNGSERFASSUNGSVORRICHTUNGEN FÜR EIN UNBEMANNTES LUFTFAHRZEUG SOWIE ENTSPRECHENDE SYSTEME UND VERFAHREN
DISPOSITIFS DE CAPTURE DE LIGNE POUR AÉRONEF SANS ÉQUIPAGE ET SYSTÈMES ET PROCÉDÉS ASSOCIÉS

(30) Priority: 27.09.2010 US 38695610 P
(43) Date of publication of application: 23.09.2020
(62) Divisional of application: 11831318.8
(73) Proprietor: Insitu, Inc., Bingen, WA 98605 (US)
(72) Inventor: THOMASIAN, Craig Aram, Chicago, IL 60606-2016 (US); DICKSON, Matthew Robert, Chicago, IL 60606-2016 (US)
(74) Representative: Boult Wade Tennant LLP

(56) References cited:
- US-A- 2 296 988
- US-A- 2 671 938
- US-A- 2 954 946
- US-B1- 6 264 140
- US-B2- 7 059 564

## Description

### CROSS-REFERENCE TO RELATED APPLICATION

The present application claims priority to U.S. Provisional Patent Application No. 61/386,956, filed September 27, 2010.

### TECHNICAL FIELD

The present disclosure describes line capture devices for unmanned aircraft, and associated systems and methods.

### BACKGROUND

Unmanned aircraft or air vehicles (UAVs) provide enhanced and economical access to areas where manned flight operations are unacceptably costly and/or dangerous. For example, unmanned aircraft outfitted with remotely controlled cameras can perform a wide variety of surveillance missions, including spotting schools of fish for the fisheries industry, monitoring weather conditions, providing border patrols for national governments, and providing military surveillance before, during and/or after military operations.

Existing unmanned aircraft systems suffer from a variety of drawbacks. For example, existing unmanned aircraft systems (which can include the aircraft itself along with launch devices, recovery devices, and storage devices) typically require substantial space. Accordingly, these systems can be difficult to install and operate in cramped quarters, such as the deck of a small fishing boat, land vehicle, or other craft. Another drawback with some existing unmanned aircraft is that, due to small size and low weight, they can be subjected to higher acceleration and deceleration forces than larger, manned air vehicles and can accordingly be prone to damage, particularly when manually handled during recovery and launch operations in hostile environments, such as a heaving ship deck. Yet another drawback with some existing unmanned aircraft systems is that they may not be suitable for recovering aircraft in tight quarters, without causing damage to either the aircraft or the platform from which the aircraft is launched and/or recovered.

US-B-7059564, in accordance with its abstract, states: *"Methods and apparatuses for capturing and recovering unmanned aircraft and other flight devices or projectiles are described. In one [arrangement], the aircraft can be captured by a recovery line in flight, a process that can be aided by a line capture device having a retainer with two portions spaced apart by a distance great enough to receive the recovery line, e.g., to capture the recovery line with increased security. The line capture device can be operatively mounted on a lifting surface of the aircraft."*

US-B-6264140, in accordance with its abstract, states: *"A method and apparatus for retrieving an aircraft in a confined space involves hanging a cable, for example from a kite or mast, across the aircraft's flight path. The aircraft approaches the cable in steady forward flight, and may strike the cable at any point on the wing, fuselage, or other leading surface. The cable then slides along the airframe as the aircraft moves forward, until it is intercepted by a hook attached to the wing tip or other convenient location. The hook captures the cable, and prevents further sliding; the cable then pulls the aircraft to a stop. Compliance of the cable, optionally combined with compliance of the cable suspension, provides acceptably gradual deceleration. The aircraft is left suspended in mid-air, and is then winched or slid to the base of the cable or other convenient retrieval point. The cable suspension and other fixed objects can be kept well clear of the flight path, so that the aircraft can continue safely in the event that it misses the cable, and make another approach."*

### SUMMARY

There is described herein an aircraft system, comprising: a line capture device body having a line slot, the line slot having an open end and a closed end; a retainer positioned proximate to the line slot, the retainer including a rotor having a plurality of rotor arms positioned to extend at least partially across the line slot as the rotor rotates relative to the body; a joint rotatably coupling the rotor to the body; a ratchet device operably coupled to the rotor to allow the rotor to rotate in a first direction and at least restrict the rotor from rotating in a second direction opposite the first.

### BRIEF DESCRIPTION OF THE DRAWINGS

Figures 1A-1B illustrate an apparatus configured to recover unmanned aircraft in accordance with embodiments of the disclosure.
Figures 2A-2B are enlarged illustrations of a capture device in the process of capturing an unmanned aircraft in accordance with an embodiment of the disclosure.
Figures 3A-3D illustrate an embodiment of the line capture device shown in Figures 2A-2B, and components of the device.
Figure 4 illustrates a line capture device having a multi-component rotor in accordance with an embodiment of the disclosure.
Figure 5A-5C illustrate line capture devices having capture gates in accordance with further examples not falling within the scope of the claims.
Figure 6 illustrates a line capture device having a sliding linkage gate in accordance with an example not falling within the scope of the claims.
Figures 7A-7B illustrate a line capture device having a translating retainer in accordance with an example not falling within the scope of the claims.

### DETAILED DESCRIPTION

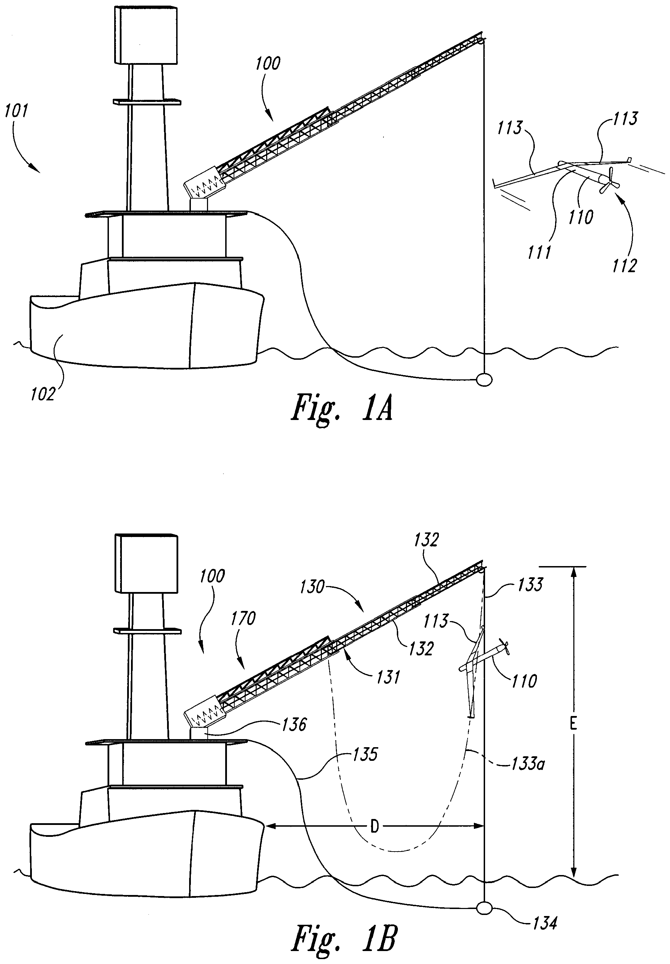

Figures 1A-1B illustrate overall views of apparatuses and methods for capturing unmanned aircraft in accordance with embodiments of the disclosure. Beginning with Figure 1A, a representative unmanned aircraft 110 can be captured by an aircraft handling system 100 positioned on a support platform 101. In one embodiment, the support platform 101 can include a boat, ship, or other water vessel 102. In other embodiments, the support platform 101 can include other structures, including a building, a truck or other land vehicle, or an airborne vehicle, such as a balloon. In many of these embodiments, the aircraft handling system 100 can be configured solely to retrieve the aircraft 110 or, in particular embodiments, it can be configured to both launch and retrieve the aircraft 10. The aircraft 10 can include a fuselage 111 and wings 113 (or a blended wing/fuselage), and is propelled by a propulsion system 112 (e.g., a piston-driven propeller).

Referring now to Figure 1B, the aircraft handling system 100 can include a recovery system 130 integrated with a launch system 170. In one aspect of this embodiment, the recovery system 130 can include an extendable boom 131 having a plurality of segments 132. The boom 131 can be mounted on a rotatable base 136 or turret for ease of positioning. The segments 132 are initially stowed in a nested or telescoping arrangement and are then deployed to extend outwardly as shown in Figure 1B. In other embodiments, the extendable boom 131 can have other arrangements, such as a scissors arrangement, a parallel linkage arrangement or a knuckle boom arrangement. In any of these embodiments, the extendable boom 131 can include a recovery line 133 extended by gravity or other forces. In one embodiment, the recovery line 133 can include 0.25 inch diameter polyester rope, and in other embodiments, the recovery line 133 can include other materials and/or can have other dimensions (e.g., a diameter of 0.3125 inch). In any of these embodiments, a spring or weight 134 at the end of the recovery line 133 can provide tension in the recovery line 133. The aircraft handling system 100 can also include a retrieval line 135 connected to the weight 134 to aid in retrieving and controlling the motion of the weight 134 after the aircraft recovery operation has been completed. In another embodiment, a different recovery line 133a (shown in dashed lines) can be suspended from one portion of the boom 131 and can attach to another point on the boom 131, in lieu of the recovery line 133 and the weight 134.

In one aspect of this embodiment, the end of the extendable boom 131 can be positioned at an elevation E above the local surface (e.g., the water shown in Figure 1B), and a distance D away from the nearest vertical structure projecting from the local surface. In one aspect of this embodiment, the elevation E can be about 15 meters and the distance D can be about 10 meters. In other embodiments, E and D can have other values, depending upon the particular installation. For example, in one particular embodiment, the elevation E can be about 17 meters when the boom 131 is extended, and about 4 meters when the boom 131 is retracted. The distance D can be about 8 meters when the boom 131 is extended, and about 4 meters when the boom 131 is retracted. In a further particular aspect of this embodiment, the boom 131 can be configured to carry both a vertical load and a lateral load via the recovery line. For example, in one embodiment, the boom 131 can be configured to capture an aircraft 110 having a weight of about 30 pounds, and can be configured to withstand a side load of about 400 pounds, corresponding to the force of the impact between the aircraft 110 and the recovery line 133 with appropriate factors of safety.

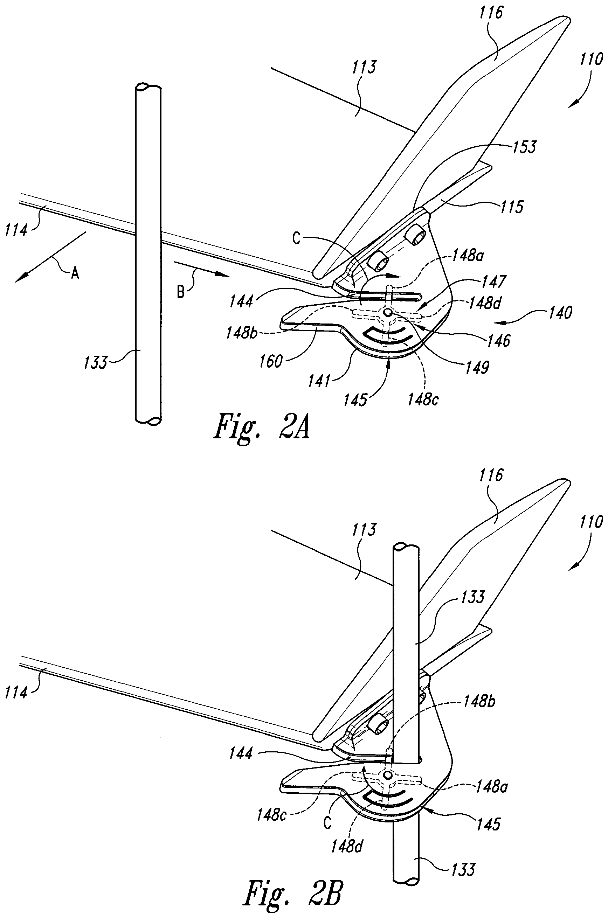

In any of the foregoing embodiments, the aircraft 110 is captured when it flies into the recovery line 133. Once captured, the aircraft 110 is suspended from the recovery line by a wing 113. Further details of apparatuses and methods for capturing the aircraft 110 are described below with reference to Figures 2A-7B.

Figure 2A is a partially schematic, isometric illustration of an outboard portion of the wing 113 of the aircraft 110 shown in Figure 1B. The wing 113 can include a winglet 116 in the illustrated embodiment but may have no winglets in other embodiments. In one aspect of the illustrated embodiment, the wing 113 includes a leading edge 114 (which can, but need not be swept), an outboard edge 115, and a line capture device 140 positioned at or near the outboard edge 115. In other embodiments, each wing 113 can include a plurality of line capture devices 140 located along the span of the wing 113, or a single line capture device located away from the outboard edge 115. In any of these embodiments, the line capture device 140 can have a cleat-type configuration. The line capture device 140 can include a line capture device body 141 with a flange 153 that is attached to the wing 113. In operation, the line capture device 140 engages the recovery line 133 to releasably and securely attach the aircraft 110 to the recovery line 133. The device 140 can include a line slot 144 positioned in the body 141, and retainer 146 movably attached to the body 141. As the aircraft 110 flies toward the recovery line 133 (as indicated by arrow A), the recovery line 133 strikes the wing leading edge 114 and causes the aircraft 110 to yaw toward the recovery line 133, which then slides outboard along the leading edge 114 toward the line capture device 140 (as indicated by arrow B). The recovery line 133 then passes into the line slot 144 and is retained in the line slot 144 by the retainer 146, as described in greater detail below. In other embodiments, the retainer can operate in other manners to secure the recovery line 133 in the line slot 144.

If the aircraft 110 is not properly aligned with the recovery line 133 during its approach, the recovery line 133 may strike the line capture device 140 instead of the leading edge 114. In one embodiment, the body 141 includes a body leading edge 160 that is swept aft so as to deflect the recovery line 133 away from the aircraft 110. This can prevent the line 133 from fouling and can reduce the yawing moment imparted to the aircraft 110, allowing the aircraft 110 to recover from the missed capture and return for another capture attempt.

During capture, the recovery line 133 travels outboard along the wing leading edge 114 to position the recovery line 133 at the line slot 144 of the line capture device 140. In one aspect of this embodiment, the retainer 146 includes a rotor 147 that rotates relative to the body 141 within a rotor slot 145 via a pivot joint (e.g., a pin or axle 149). The rotor 147 includes multiple rotor arms 148, four of which are shown in Figure 2A as a first rotor arm 148a, a second rotor arm 148b, a third rotor arm 148c, and a fourth rotor arm 148d. Before the line capture device 140 engages the recovery line 133, one of the rotor arms (e.g. the first rotor arm 148a) is located transverse to (e.g. perpendicular to) the line slot 144, and none of the remaining rotor arms extend into the line slot 144. Accordingly, the first rotor arm 148a can extend fully or at least partially across the line slot 144. The rotor 147 can be manually placed in this orientation, or a ratchet mechanism can ensure that the rotor 147 stops at only positions for which one of the rotor arms 148 extends transverse to the line slot 144. As the recovery line 133 passes into and along the line slot 144, it presses against the first rotor arm 148a, causing the rotor 147 to rotate clockwise, as indicated by arrow C. As the rotor 147 rotates, the recovery line 133 is permitted to pass to the end of the line slot 144. At the same time, the second rotor arm 148b rotates into the position previously occupied by the first rotor arm 148a, as shown in Figure 2B. In one aspect of this embodiment, the line slot 144 (which can be tapered) has a width that is less than the diameter of the recovery line 133. Accordingly, the recovery line 133 can be pinched in the line slot 144 as it travels outboard and aft, securing the aircraft 110 to the recovery line 133. The momentum of the aircraft relative to the recovery line 133 provides the impetus to securely engage the recovery line 133 with the line capture device 140.

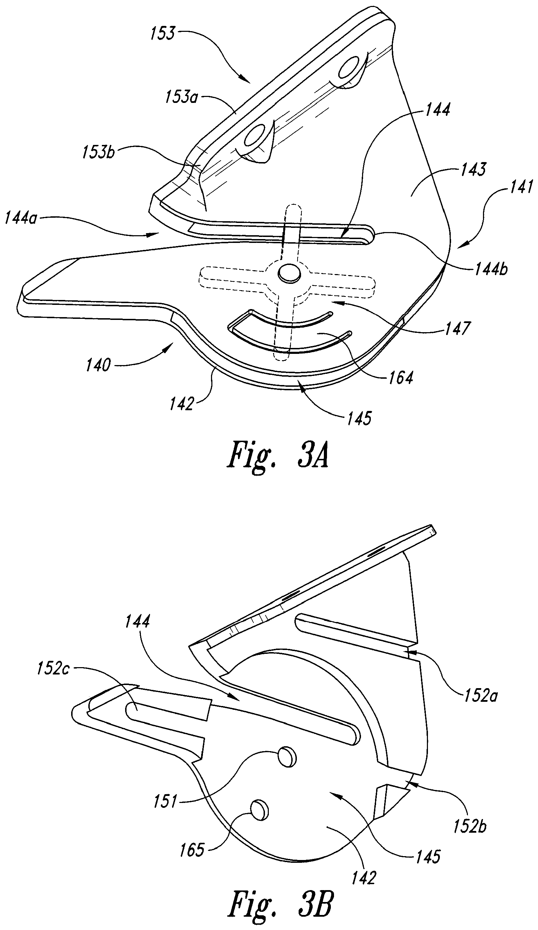

Figures 3A-3D illustrate further aspects of a particular embodiment of the line capture device 140 described above with reference to Figures 2A-2B. In Figure 3A, the line capture device 140 is shown from above. The body 141 in this embodiment is formed from two components: a base or base portion 142 and a cover or cover portion 143 that is sealably attached to the base 142. Both the base 142 and the cover 143 have cut-outs that together define the line slot 144. The line slot 144 can have an open end 144a and a closed end 144b. Both the base 142 and the cover 143 have corresponding flange portions 153a, 153b, respectively, that together form the attachment flange 153 used to secure the line capture device 140 to the aircraft 110 (Figure 2B). The central portions of the base 142 and the cover 143 are spaced apart from each other to define, at least in part, the rotor slot 145 in which the rotor 147 rotates. Accordingly, the rotor 147 can be protected from environmental factors and can be held in place by the base 142 and the cover 143 so as not to bend or deflect significantly as the recovery line 133 (Figure 2B) impinges on the rotor arms 148. The cover 143 includes a ratchet device, e.g., a ratchet tab 164 that can be bounded by a milled or otherwise formed groove. Prior to first use, the ratchet tab 164 is bent downwardly (into the plane of Figure 3A) toward the base 142. The tab 164 can accordingly be sloped inwardly into the rotor slot 145, in a direction generally tangential to the direction of rotation of the rotor 147. As a result, the ratchet tab 164 can resist but allow clockwise rotation by the rotor 147, and prevent significant counterclockwise rotation. In this manner, the ratchet tab 164 can allow the rotor 147 to turn as it captures the recovery line 133, and prevent the rotor 147 from releasing the recovery line 133 until an operator actively manipulates the device 140.

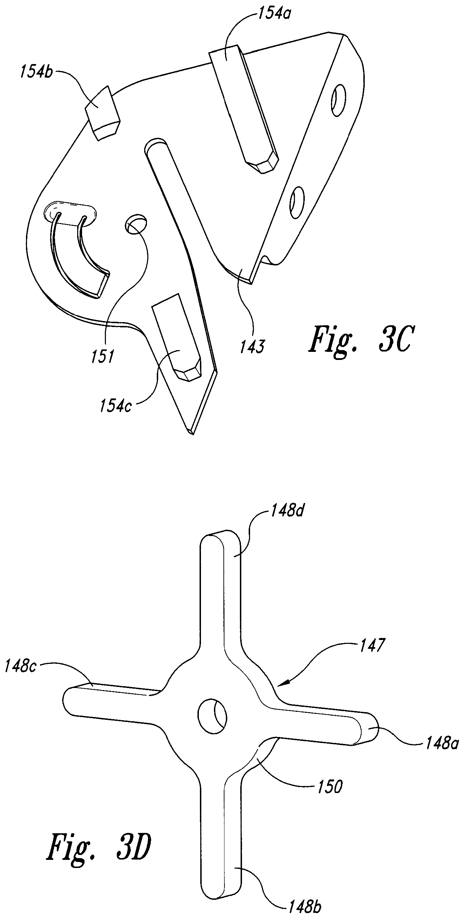

Figure 3B is a top isometric view of an embodiment of the base 142. As described above, the base 142 includes a cut-out that defines, in part, the line slot 144, and a cut-out that defines, in part, the rotor slot 145. The base 142 also includes a pin aperture 151 that receives one end of the pin or axel 149 shown in Figure 3A. The base 142 can also include features that aid in aligning and securing it to the cover 143 (Figure 3A). For example, the base 142 can include multiple alignment slots 152, shown in Figure 3B as a first alignment slot 152a, a second alignment slot 152b, and a third alignment slot 152c. The alignment slots 152a-152c align with corresponding tabs carried by the cover 143, as discussed further below with reference to Figure 3C. In one aspect of an embodiment shown in Figure 3B, at least one of the alignment slots (e.g. the second alignment slot 152b) is tapered to prevent the corresponding tab from pulling out of the slot in a direction generally normal to the plane of Figure 3B. The base 142 can also include a release aperture 165 or other feature that allows the operator to release the recovery line 133 (Figure 3A) after the capture operation is complete. In one embodiment, the release aperture 165 is positioned to allow the operator to insert a tool into the rotor slot 145. The tool presses outwardly against the ratchet tab 164 (Figure 3A) so that the operator can rotate the rotor counterclockwise and release the recovery line 133.

Figure 3C is a bottom isometric view of the cover 143, illustrating the corresponding tabs 154 (shown as a first tab 154a, a second tab 154b, and a third tab 154c) that are received in the alignment slots 152a-152c described above with reference to Figure 3B. The second tab 154b has tapered sides that slide into the second alignment slot 152b and that resist relative motion normal to the plane at Figure 3C between the cover 143 and the base 142. The cover 143 also includes a pin aperture 151 that receives one end of the axel or pin 149, thus securing the pin between the cover 143 and the base 142 and capturing the rotor 147 in the rotor slot 145.

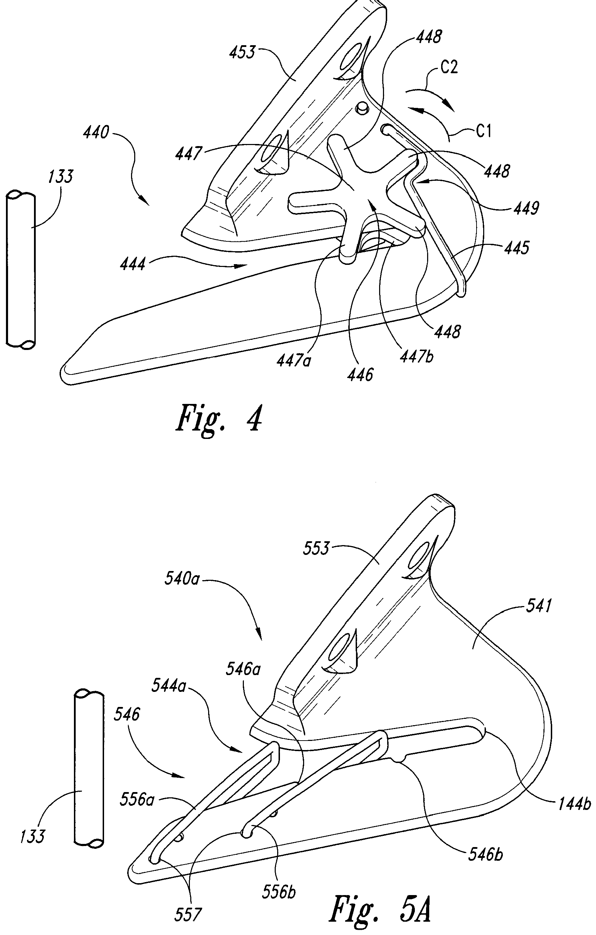

Figure 3D is an isometric illustration of the rotor 147. The rotor 147 includes a hub 150, the four rotor arms 148a-148d, and a pin aperture 151 that receives the pin 149 described above. In a particular embodiment, the rotor 147 includes four rotor arms to ensure that only one rotor arm is positioned in the corresponding line slot 144 at a time. In other embodiments, for example, if the line slot has other shapes or geometries, the rotor 147 can include other numbers of rotor arms 148. One representative example is described further below with reference to Figure 4.

Figure 4 is a partially schematic, isometric illustration of a line capture device 440 configured in accordance with another embodiment of the disclosure. In one aspect of this embodiment, the line capture device 440 includes a body 441 and a flange 453 for securing the body 441 to the aircraft 110 (Figure 1A). The body 441 has a line capture slot 444 that operates in generally the same manner described above with reference to Figures 2A-3D. The line capture device 440 further includes a retainer 446 having a rotor 447 that rotates relative to the body 441 via a pin or axle (not visible in Figure 4). The rotor 447 can include a first or upper rotor portion 447a positioned adjacent to an upward facing surface of the body 441, and a second or lower portion 447b positioned adjacent the opposite face of the body 441. The first and second portions 447a, 447b are connected to each other via the pin, which passes through a corresponding pin aperture in the body 441. Thus, unlike the arrangement described above with reference to Figures 3A-3D, the line capture device 440 has two rotor portions with the body 441 positioned in between, rather than a single rotor portion positioned between a body and a cover.

The retainer 446 shown in Figure 4 can further include a ratchet device that includes a ratchet spring 445 shaped to engage any of the rotor arms 448 carried by the rotor 447. The ratchet spring 455 is shaped to provide a biasing force directed toward the left of Figure 4, and, as shown in Figure 4, bears on two of the rotor arms 448 simultaneously. Accordingly, the ratchet spring 445 can engage the ends of the rotor arms 448. The ratchet spring 445 can include a dog-leg or jog 449 that bears against the side of one of the arms 448 to restrict or prevent the rotor 447 from rotating counterclockwise. This arrangement keeps the rotor 447 in position until the recovery line 133 strikes it and rotates it in a first direction, e.g., counterclockwise (as indicated by arrow C1) as the recovery line 133 passes along the length of the line capture slot 444. The rotor 447 is at least restricted from rotating in a second direction, e.g., clockwise (as indicated by arrow C2). Because the rotor 447 is positioned toward the end of the line capture slot 444, it can include more than four rotor arms 448 (e.g. five rotor arms 448) with only one of the rotor arms 448 positioned across the line capture slot 444.

One feature of the line capture device 440 shown in Figure 4 is that the ratchet arrangement keeps the recovery line 133 from being pulled out of the line capture slot 444 even if the recovery line 133 folds during the capture operation. Another feature of this embodiment is that it requires no setup prior to use. That is, the ratchet spring 455 operates to always place the rotor 447 in a position suitable for capture. Still a further feature is that the line capture device 440 can be easily disengaged from the recovery line 133, e.g., by (a) pushing the ratchet spring away from the rotor 447 (as indicated by arrow F), thus allowing the rotor 447 to rotate freely in a clockwise direction C2, and then (b) moving the recovery line 133 out of the line capture slot 444.

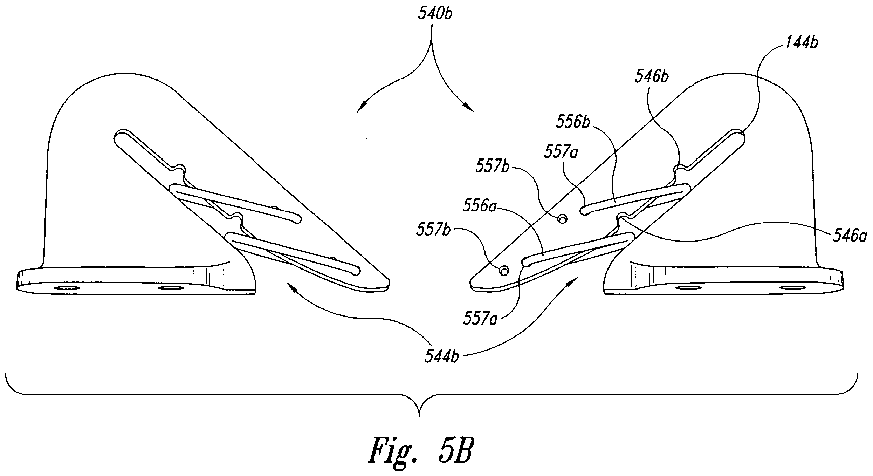

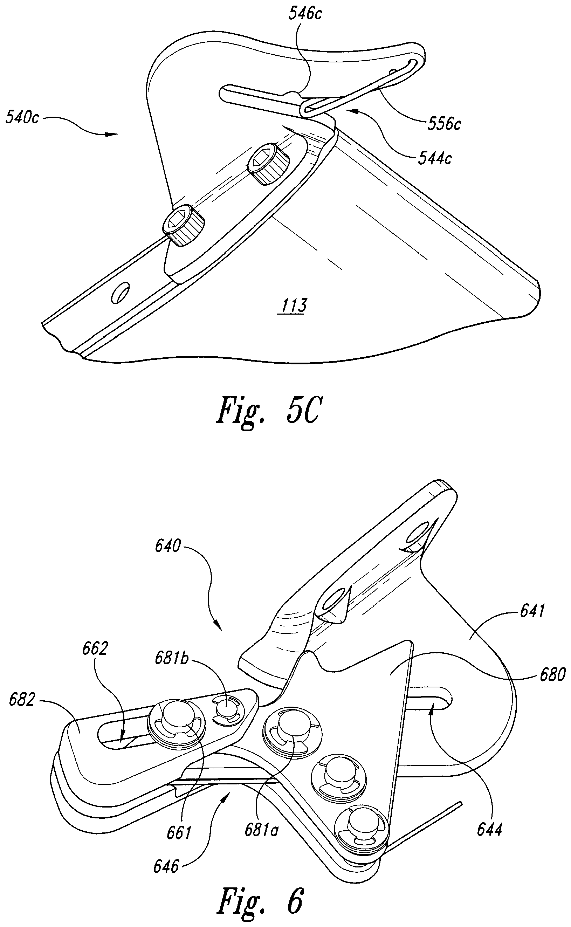

Figure 5A is a partially schematic, top isometric illustration of a line capture device 540a configured in accordance with yet another embodiment of the disclosure. In this embodiment, the line capture device 540a includes a body 541 having a line slot 544a and a flange 553. The line capture device 540a also include a retainer 546 that in turn includes multiple independently operable gates 556 (two are shown in Figure 5 as a first gate 556a and a second gate 556b). The gates 556 can include flexible but resilient wires or wire-shaped elements that are attached to the body 541 so as to be biased to positions that extend across the line slot 544a. As the recovery line 133 passes into the line slot 544a, it can push one or both of the gates 556a, 556b out of the way, and allow the gate(s) to spring back into position, thus securing the recovery line 133 within the line slot 544a. Because the gates 556a, 556b are independently operable, they provide a redundancy feature. As discussed above, the gates 556a, 556b can be formed from a suitable high strength wire, and can be rigidly connected to the body 541. Accordingly, the gates 556 twist about an axis generally perpendicular to the plane of Figure 5A when impinged upon by the recovery line 133. The body 541 can include two receptacles 546a, 546b that receive the ends of the corresponding gates 556a, 556b to allow each gate to (successively) completely clear the line slot 544a as the recovery line 133 passes by. The spring force of the wire (or other resilient material forming the gates 556a, 556b) in torsion causes the gates to return to the positions shown in Figure 5A after the recovery line 133 has passed into the line slot 544a. The body 541 can include through-holes 557, with coaxial openings in the oppositely facing surfaces of the body 541, that receive the proximal ends of the wire-shaped elements forming the gates 556, for securing the elements to the body. The arrangement shown in Figure 5A has the advantage of simplicity due to the relatively small number of parts it requires.

Figure 5B illustrates two line capture devices 540b (one for a right wing 113 and the other for a left wing 113), each having a configuration in accordance with another embodiment of the disclosure. In this particular embodiment, the line capture devices 540b operate generally similar to the line capture device 540a described above with reference to Figure 5A. In addition, the line capture devices 540b include a line slot 544b that is narrow in the region between the first and second gates 556a, 556b. Accordingly, it is expected that this arrangement will more securely capture a recovery line that passes the first gate 556a but not the second gate 556b. In the embodiments shown in Figures 5A and 5B, the gates 556a, 556b can be spaced apart from each other by a distance sufficient to accommodate the capture line 133 (Figure 5A), and the second gate 556b can be spaced apart from the closed end 144b of the line slot 544a, 544b by a distance sufficient to accommodate the capture line 133. In a particular aspect of an embodiment shown in Figure 5B, the proximal ends of the wire-shaped elements forming the gates 556a, 556b can be offset, and can be received in corresponding offset holes 557a, 557b in the body 541. The holes can be through holes or can extend part-way through the opposing surfaces of the body 541.

Figure 5C illustrates another line capture device 540c. The line capture device 540c has a single gate 556c that is structurally similar to the first and second gates 556a, 556b described above, and that is attached to the corresponding body 541 in a generally similar manner, so as to be biased to a position that extends across a corresponding line slot 544c. A receptacle 546c along the edge of the line slot 544c receives the end of the gate 556c as the gate opens. The foregoing arrangement has the advantage of being simpler than the arrangements described above with reference to Figures 5A and 5B. Conversely, the arrangements described above with reference to Figures 5A and 5B can provide redundancy and an additional level of security for capturing the recovery line 133.

Figure 6 illustrates still another line capture device 640 that includes a body 641 having a line slot 644. The body 641 carries a retainer 646 that slides relative to the body 641 during capture. In particular, the retainer 646 can include a strike plate 680 and a closing tab 682. The strike plate 680 is pivotably connected to the body 641 at a first pivot joint 681a, and is pivotably connected to the closing tab 682 at a second pivot joint 681b. The strike plate 680 also carries a guide pin 661 that is received in a corresponding guide slot 662 of the closing tab 682. In operation, the closing tab 682 can guide the recovery line 633 to hit the strike plate 680, which can be spring-loaded. Upon being struck by the recovery line 133, the strike plate 680 rotates clockwise about the first pivot joint 681a, opening the line slot 644 and allowing the recovery line 633 to pass into the line slot 644. As the strike plate 680 rotates, it pulls the closing tab 682 across the entrance of the line slot 644 via the second pivot joint 681b. The motion of the closing tab 682 is guided by the guide pin 661 received in the guide slot 662.

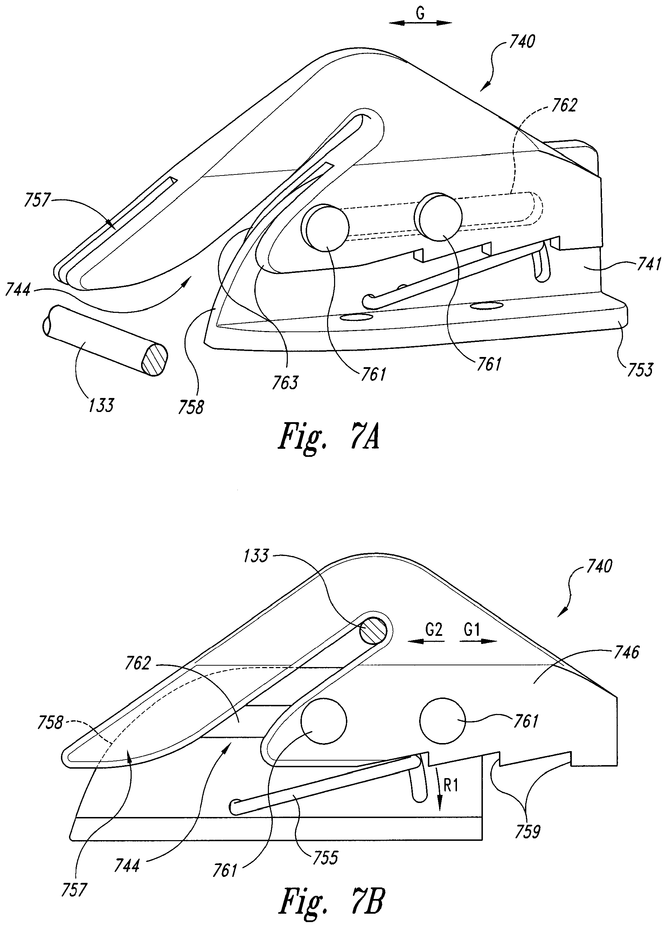

Figures 7A and 7B illustrate still another line capture device 740 in accordance with an embodiment of the disclosure. Referring first to Figure 7A, the line capture device 740 includes a body 741 carrying a mounting flange 753. The body 741 also includes a guide slot 762. A retainer 746 has two ears 763, each of which extends around an oppositely facing side of the body 741. One or more guide pins 761 (e.g., two) connect the two ears 763 together and pass through the guide slot 762. Accordingly, the retainer 746 can translate back and forth as indicated by arrow G relative to the body 741. The retainer 746 includes a line slot 744 into which the recovery line 133 passes during a recovery/capture process. The retainer 746 also includes a retainer slot 757 that receives a corresponding body tab 758 of the body 741 when the recovery line 133 has been captured, as discussed further below with reference to Figure 7B.

Figure 7B illustrates the line capture device 740 after it has successfully engaged the recovery line 133. The recovery line 133 has passed to the end of the line slot 744, and the force of the recovery line 133 on the retainer 746 has driven the retainer to the right as indicated by arrow G1, with guidance provided by the guide pins 761 in the guide slot 762. Once in this closed position, a ratchet spring 755 carried by the body 741 engages one of the ratchet teeth 759 carried by the retainer 746 to prevent the retainer from moving to the left, which would allow the recovery line 133 to escape from the line slots 744. As the retainer 746 moves to the right as indicated by arrow G1, the body tab 758 passes into the retainer slot 757. This action prevents the retainer 746 from bending or deflecting outwardly from the plane of Figure 7B, which might otherwise allow the recovery line 133 to pass out at the slot 744. To disengage the recovery line 133, the operation can rotate the ratchet spring as indicated by arrow R1 and slide the retainer 746 as indicated by arrow G2.

One feature of the embodiments described above with reference to Figures 1A-7B is that the line capture devices can not only capture the recovery line, but also resist or account for a tendency of the recovery line to disengage from the line slot as the aircraft twists and rotates during the capture maneuver. Accordingly, embodiments of the present disclosure are expected to secure the aircraft with a potentially greater degree of reliability than other devices.

From the foregoing, it will be appreciated that specific embodiments of the disclosure have been described herein for purposes of illustration, but that various modifications may be made without deviating from the scope of the invention. For example, the slots for capturing the recovery line can have other orientations, shapes, and/or sizes in other embodiments. The devices used to retain the recovery lines within the slots can include other arrangements to keep them biased in the closed position. Such arrangements can include other types of springs. The retainers can move between first positions (restricting access to the line slot) and second positions (allowing access to the line slot) that are different than those described above. The rotor rotation directions can be different than those expressly disclosed above. In many of these embodiments, the recovery line forces the retainer to move from the first position to the second position. In other embodiments, other forces can cause this motion.

For example, the line capture devices were described in the context of a representative unmanned air vehicle shown in Figures 1A and 1B. In other embodiments, any of the foregoing line capture devices can be mounted on suitable aircraft having other configurations. The alignment slots and tabs described above in the context of the base and cover, respectively, in Figures 3B and 3C can be "swapped" and instead placed on the cover and base, respectively.

## Claims

1. An aircraft system, comprising:
a line capture device body (141; 441) having a line slot (144; 444), the line slot (144; 444) having an open end (144a) and a closed end (144b);
a retainer (146; 446) positioned proximate to the line slot (144; 444), the retainer (146; 446) including a rotor (147; 447) having a plurality of rotor arms (148; 448) positioned to extend at least partially across the line slot (144; 444) as the rotor (147; 447) rotates relative to the body (141; 441);
a joint rotatably coupling the rotor (147; 447) to the body (141; 441);
a ratchet device operably coupled to the rotor (147; 447) to allow the rotor (147; 447) to rotate in a first direction and at least restrict the rotor (147; 447) from rotating in a second direction opposite the first.

2. The system of claim 1 wherein the line capture device body (141) includes a base portion (142) and a cover portion (143) carried by the base portion (142), with at least part of the base portion (142) spaced apart from at least part of the cover portion (143) to define, at least in part, a rotor slot (145), and wherein the rotor (147) is rotatably positioned between the base portion (142) and the cover portion (143) in the rotor slot (145).

3. The system of claim 2 wherein the ratchet device includes a ratchet tab (164) projecting inwardly into the rotor slot (145) from at least one of the base portion (142) and the cover portion (143), the ratchet tab (164) being sloped inwardly into the rotor slot (145) in a direction generally tangential to the first direction.

4. The system of claim 2 wherein at least one of the base portion (142) and the cover portion (143) includes a tab and wherein the other of the base portion (142) and the cover portion (143) includes an alignment slot (152) positioned to receive the tab and resist relative motion between the cover portion (143) and the base portion (142).

5. The system of claim 1 wherein the line capture device body (441) has a first surface and a second surface facing away from the first surface, and wherein the rotor (447) is a first rotor (447a) positioned adjacent to the first surface, and wherein the system further comprises a second rotor (447b) positioned adjacent to the second surface and rotatably coupled to the line capture device body (441), the second rotor (447b) having a plurality of rotor arms (448) positioned to extend at least partially across the line slot (444) as the second rotor (447b) rotates relative to the line capture device body (441).

6. The system of claim 1 wherein individual rotor arms (448) have ends positioned radially outwardly from a pin, and wherein the ratchet device includes a spring (445) positioned to successively engage with the ends of corresponding individual rotor arms (448) as the rotor (447) rotates relative to the line capture device body (441).

7. The system of claim 1, wherein the line slot (144; 444) is tapered.

8. The system of claim 1, further comprising an aircraft (110) having a fuselage (111) and a wing (113), and wherein the line capture device body (141; 441) is attached to the wing (113).

9. The system of claim 8, wherein the line capture device body (141; 441) has a leading edge (160), and wherein the leading edge (160) is swept aft relative to the fuselage (111).

10. The system of claim 8, wherein the wing (113) comprises a leading edge (114) and an outboard edge (115), and wherein the line capture device body (141; 441) is positioned at or near the outboard edge (115).

11. The system of claim 8, wherein the wing (113) comprises a plurality of line capture device bodies (141; 441) located along a span of the wing (113).

12. The system of claim 8, wherein the line capture device body (141; 441) is located away from an outboard edge of the wing (113).

13. The system of claim 1, further comprising:
a recovery line (133); and
a support carrying the recovery line (133).

## Patentansprüche

1. Flugzeugsystem, umfassend:
einen Leineneinfangvorrichtungskörper (141; 441) mit einem Leinenschlitz (144; 444), wobei der Leinenschlitz (144; 444) ein offenes Ende (144a) und ein geschlossenes Ende (144b) aufweist;
einen Rückhaltekörper (146; 446), der in der Nähe des Leinenschlitzes (144; 444) angeordnet ist, wobei der Rückhaltekörper (146; 446) einen Rotor (147; 447) mit einer Mehrzahl von Rotorarmen (148; 448) aufweist, die so angeordnet sind, dass sie sich zumindest teilweise über den Leinenschlitz (144; 444) erstrecken, wenn sich der Rotor (147; 447) relativ zum Körper (141; 441) dreht;
ein Gelenk, das den Rotor (147; 447) drehbar mit dem Körper (141; 441) verbindet;
eine Ratschenvorrichtung, die funktionsmäßig mit dem Rotor (147; 447) gekoppelt ist, um dem Rotor (147; 447) zu ermöglichen, sich in einer ersten Richtung zu drehen, und eine Drehung des Rotors (147; 447) in einer zweiten, der ersten entgegengesetzten Richtung zumindest einzuschränken.

2. System nach Anspruch 1, bei dem der Leineneinfangvorrichtungskörper (141) einen Basisabschnitt (142) und einen von dem Basisabschnitt (142) getragenen Abdeckabschnitt (143) aufweist, wobei zumindest ein Teil des Basisabschnitts (142) von zumindest einem Teil des Abdeckabschnitts (143) beabstandet ist, um zumindest teilweise einen Rotorschlitz (145) zu definieren, und wobei der Rotor (147) in dem Rotorschlitz (145) zwischen dem Basisabschnitt (142) und dem Abdeckabschnitt (143) drehbar positioniert ist.

3. System nach Anspruch 2, bei dem die Ratschenvorrichtung eine Ratschenlasche (164) aufweist, die von dem Basisabschnitt (142) und/oder dem Abdeckabschnitt (143) nach innen in den Rotorschlitz (145) vorspringt, wobei die Ratschenlasche (164) nach innen in den Rotorschlitz (145) in einer Richtung geneigt ist, die allgemein tangential zu der ersten Richtung verläuft.

4. System nach Anspruch 2, bei dem von Basisabschnitt (142) und Abdeckabschnitt (143) wenigstens einer eine Lasche aufweist und der jeweils andere von Basisabschnitt (142) und Abdeckabschnitt (143) einen Ausrichtschlitz (152) aufweist, der positioniert ist, um die Lasche aufzunehmen und einer relativen Bewegung zwischen dem Abdeckabschnitt (143) und dem Basisabschnitt (142) zu widerstehen.

5. System nach Anspruch 1, bei dem der Leineneinfangvorrichtungskörper (441) eine erste Oberfläche und eine von der ersten Oberfläche abgewandte zweite Oberfläche aufweist, und bei dem der Rotor (447) ein erster Rotor (447a) ist, der angrenzend an die erste Oberfläche positioniert ist, wobei das System ferner einen zweiten Rotor (447b) umfasst, der angrenzend an die zweite Oberfläche positioniert und drehbar mit dem Leineneinfangvorrichtungskörper (441) gekoppelt ist, wobei der zweite Rotor (447b) eine Mehrzahl von Rotorarmen (448) aufweist, die so positioniert sind, dass sie sich zumindest teilweise über den Leinenschlitz (444) erstrecken, wenn sich der zweite Rotor (447b) relativ zu dem Leineneinfangvorrichtungskörper (441) dreht.

6. System nach Anspruch 1, bei dem einzelne Rotorarme (448) Enden haben, die von einem Stift radial nach außen positioniert sind, und bei dem die Ratschenvorrichtung eine Feder (445) enthält, die positioniert ist, um nacheinander mit den Enden der entsprechenden einzelnen Rotorarme (448) in Eingriff zu kommen, wenn sich der Rotor (447) relativ zum Leineneinfangvorrichtungskörper (441) dreht.

7. System nach Anspruch 1, wobei der Leinenschlitz (144; 444) verjüngt ist.

8. System nach Anspruch 1, das ferner ein Flugzeug (110) mit einem Rumpf (111) und einem Flügel (113) umfasst, wobei der Leineneinfangvorrichtungskörper (141; 441) an dem Flügel (113) befestigt ist.

9. System nach Anspruch 8, bei dem der Leineneinfangvorrichtungskörper (141; 441) eine Vorderkante (160) aufweist, und bei dem die Vorderkante (160) relativ zum Rumpf (111) nach hinten gepfeilt ist.

10. System nach Anspruch 8, bei dem der Flügel (113) eine Vorderkante (114) und eine Außenkante (115) umfasst, und bei dem der Leineneinfangvorrichtungskörper (141; 441) an oder in der Nähe der Außenkante (115) angeordnet ist.

11. System nach Anspruch 8, bei dem der Flügel (113) eine Mehrzahl von Leineneinfangvorrichtungskörpern (141; 441) umfasst, die entlang einer Spannweite des Flügels (113) angeordnet sind.

12. System nach Anspruch 8, bei dem der Leineneinfangvorrichtungskörper (141; 441) entfernt von einer Außenkante des Flügels (113) angeordnet ist.

13. System nach Anspruch 1, das ferner umfasst:
eine Fangleine (133); und
einen Träger, der die Fangleine (133) trägt.

## Revendications

1. Système d'aéronef, comprenant :
un corps de dispositif de capture de ligne (141 ; 441) présentant une fente de ligne (144 ; 444), la fente de ligne (144 ; 444) présentant une extrémité ouverte (144a) et une extrémité fermée (144b) ;
un dispositif de retenue (146 ; 446) positionné à proximité de la fente de ligne (144 ; 444), le dispositif de retenue (146 ; 446) incluant un rotor (147 ; 447) présentant une pluralité de bras de rotor (148 ; 448) positionnés pour s'étendre au moins partiellement à travers la fente de ligne (144 ; 444) lorsque le rotor (147 ; 447) tourne par rapport au corps (141 ; 441) ;
un joint couplant de manière rotative le rotor (147 ; 447) au corps (141 ; 441) ;
un dispositif à rochet couplé de manière opérationnelle au rotor (147 ; 447) pour permettre au rotor (147 ; 447) de tourner dans une première direction et au moins empêcher le rotor (147 ; 447) de tourner dans une seconde direction opposée à la première.

2. Système selon la revendication 1, dans lequel le corps de dispositif de capture de ligne (141) inclut une partie de base (142) et une partie de couvercle (143) supportée par la partie de base (142), avec au moins une partie de la partie de base (142) espacée d'au moins une partie de la partie de couvercle (143) pour définir, au moins en partie, une fente de rotor (145), et dans lequel le rotor (147) est positionné de manière rotative entre la partie de base (142) et la partie de couvercle (143) dans la fente de rotor (145).

3. Système selon la revendication 2, dans lequel le dispositif à rochet comprend une languette d'encliquetage (164) faisant saillie vers l'intérieur dans la fente de rotor (145) depuis au moins l'une de la partie de base (142) et de la partie de couvercle (143), la languette d'encliquetage (164) étant inclinée vers l'intérieur jusque dans la fente de rotor (145) dans une direction généralement tangentielle à la première direction.

4. Système selon la revendication 2, dans lequel au moins l'une de la partie de base (142) et de la partie de couvercle (143) inclut une languette et dans lequel l'autre de la partie de base (142) et de la partie de couvercle (143) inclut une fente d'alignement (152) positionnée pour recevoir la languette et résister à un mouvement relatif entre la partie de couvercle (143) et la partie de base (142).

5. Système selon la revendication 1, dans lequel le corps de dispositif de capture de ligne (441) présente une première surface et une seconde surface orientée à l'opposé de la première surface, et dans lequel le rotor (447) est un premier rotor (447a) positionné adjacent à la première surface, et dans lequel le système comprend en outre un second rotor (447b) positionné adjacent à la seconde surface et couplé de manière rotative au corps de dispositif de capture de ligne (441), le second rotor (447b) présentant une pluralité de bras de rotor (448) positionnés pour s'étendre au moins partiellement à travers la fente de ligne (444) lorsque le second rotor (447b) tourne par rapport au corps de dispositif de capture de ligne (441).

6. Système selon la revendication 1, dans lequel des bras de rotor individuels (448) présentent des extrémités positionnées radialement vers l'extérieur à partir d'une broche, et dans lequel le dispositif à rochet inclut un ressort (445) positionné pour venir en prise successivement avec les extrémités de bras de rotor individuels correspondants (448) lorsque le rotor (447) tourne par rapport au corps de dispositif de capture de ligne (441).

7. Système selon la revendication 1, dans lequel la fente de ligne (144 ; 444) est effilée.

8. Système selon la revendication 1, comprenant en outre un aéronef (110) présentant un fuselage (111) et une aile (113), et dans lequel le corps de dispositif de capture de ligne (141 ; 441) est fixé à l'aile (113).

9. Système selon la revendication 8, dans lequel le corps de dispositif de capture de ligne (141 ; 441) présente un bord d'attaque (160), et dans lequel le bord d'attaque (160) est en flèche arrière par rapport au fuselage (111).

10. Système selon la revendication 8, dans lequel l'aile (113) comprend un bord d'attaque (114) et un bord extérieur (115), et dans lequel le corps de dispositif de capture de ligne (141 ; 441) est positionné au niveau ou à proximité du bord extérieur (115).

11. Système selon la revendication 8, dans lequel l'aile (113) comprend une pluralité de corps de dispositif de capture de ligne (141 ; 441) situés le long d'une envergure de l'aile (113).

12. Système selon la revendication 8, dans lequel le corps de dispositif de capture de ligne (141 ; 441) est situé à l'écart d'un bord extérieur de l'aile (113).

13. Système selon la revendication 1, comprenant en outre :
une ligne de récupération (133) ; et
un support portant la ligne de récupération (133).
